# FASCICULE DE BREVET EUROPEEN

(11) **EP 2 850 248 B1**
(45) Date de publication et mention de la délivrance du brevet: **08.02.2017**
(21) Numéro de dépôt: 13723751.7
(22) Date de dépôt: 15.05.2013
(51) Int. Cl.: D21H 19/56, C09D 129/04, C08K 9/08, C08K 3/00

(54) **PROCÉDÉ D'ENDUCTION DE SUPPORTS SOLIDES**
VERFAHREN ZUM BESCHICHTEN FESTER SUBSTRATE
METHOD FOR COATING SOLID SUBSTRATES

(30) Priorité: 15.05.2012 FR 1254444
(43) Date de publication de la demande: 25.03.2015
(73) Titulaire: Centre National de la Recherche Scientifique (C.N.R.S.), 75016 Paris (FR)
(72) Inventeur: SAMAIN, Daniel, F-38240 Meylan (FR); STINGA, Camélia, F-38100 Grenoble (FR)
(74) Mandataire: Regimbeau
(86) Numéro de dépôt international: PCT/EP2013/060043
(87) Numéro de publication internationale: WO 2013/171263

(56) Documents cités:
- WO-A1-2006/049981
- WO-A1-2009/083525
- US-A- 4 900 620

## Description

La présente invention se rapporte à des procédés pour former des films barrière à base d'alcool polyvinylique (PVA) et de microparticules à la surface de supports solides et notamment de supports solides poreux tels que le papier ou le carton.

Il était connu de rendre occlusifs des supports poreux tels que du carton ou du papier par enduction avec une couche de PVA. Le PVA confère des propriétés barrières aux gaz et aux graisses mais il est peu résistant à l'eau. Les propriétés barrières de ces films de PVA peuvent ensuite être améliorées de façon très significative par le greffage chromatogénique d'acides gras tel que décrit dans le WO2009/083525.

Nous avons montré qu'il était possible de conférer des propriétés hydrophobes supérieures à la surface d'un substrat solide en recouvrant ce dernier par une couche d'alcool polyvinylique puis en faisant réagir la surface de cette dernière avec des acides gras à longues chaines selon le procédé de chromatogénie (EP1007202). Nous avons notamment montré que, de manière inattendue, la réaction ne se limitait pas à la surface même de la couche de PVA mais qu'elle pénétrait légèrement en profondeur pour former une mince pellicule de PVA totalement acylé. Les films barrière ainsi obtenus ont de remarquables propriétés de barrière à l'eau, aux graisses, au gaz et à la vapeur d'eau.

L'intérêt d'ajouter des nano/micro particules à une enduction est par ailleurs largement documenté et bien connu de l'homme de l'art (Schuman T et al., 2005, Smith H and Floyd WC, 2006). Il peut s'agir simplement d'augmenter le poids sec de la sauce de couchage pour faciliter son application, de la pigmenter ou de modifier ses propriétés mécaniques comme la résistance à l'abrasion. Un autre intérêt est d'augmenter ses propriétés barrière vis-à-vis de gaz ou de liquides par le principe de l'augmentation de la tortuosité (Schuman T et al., 2005, P. Duangkaew, J. Wootthikanokkhan, 2008, Chun-Chen Yang & Ying-Jeng Lee , 2009).

Malheureusement, nous avons constaté que l'introduction de ces micro/nanoparticules à la sauce de couchage de PVA se traduisait après greffage chromatogénique par une baisse marquée des valeurs de barrière à l'eau liquide. La présence de charges minérales hydrophiles au sein de la couche de PVA conduit à des propriétés barrières à l'eau dégradées. Tout se passe comme si ces particules se comportaient comme autant de petits puits hydrophiles.

La présente invention propose de coupler au préalable les particules avec du PVA en ancrant ce PVA à la surface des particules avant de mélanger ces particules au PVA pour l'enduction des supports solides. Après enduction des supports, le greffage d'acides gras par chromatogénie se traduit selon les cas soit par un retour aux valeurs barrière obtenues sans introduction de particules soit à une nette amélioration de ces valeurs barrière.

### RESUME

L'invention a pour objet un procédé d'enduction d'un support solide comprenant les étapes suivantes:
a) On dispose de particules couplées à du PVA;
b) On prépare une sauce de couchage comprenant du PVA et lesdites particules couplées à du PVA;
c) On enduit le support solide avec ladite sauce de couchage ;
d) On greffe au moins un acide gras ayant une chaine aliphatique comprenant au moins 12 atomes de carbone sur le support solide enduit avec la sauce de couchage.

Dans des modes de réalisation préférés, le support solide est un support cellulosique poreux tel que le papier et le carton.

De préférence, le PVA est couplé aux particules par des liaisons covalentes ou polyélectrostatiques.

De préférence, les particules sont des particules minérales choisies parmi la montmorillonite, la laponite, le talc et le carbonate de calcium.

Dans un premier mode de réalisation, les particules sont des particules minérales couplées à du PVA cationique.

Dans un autre mode de réalisation, les particules sont des particules minérales couplées à du PVA anionique.

Dans un autre mode de réalisation, les particules sont des particules minérales couplées à du PVA silicate.

De préférence, le PVA compris dans la sauce de couchage a un taux d'hydrolyse supérieur à 80%.

De préférence, le PVA compris dans la sauce de couchage a une masse molaire (Mw) d'au moins 10 000 g/mol.

Préférentiellement, la sauce de couchage comprend au moins 5% en poids de PVA et au moins 1% en poids de particules couplées à du PVA.

De préférence, l'acide gras est choisi parmi l'acide stéarique, l'acide palmitique et l'acide béhénique.

De préférence, le greffage de l'acide gras est effectué par estérification en phase hétérogène avec un chlorure d'acide ayant une chaine aliphatique comprenant au moins 12 atomes de carbone.

Plus préférentiellement, le greffage de l'acide gras est effectué par estérification en phase hétérogène avec du chlorure d'acide stéarique

L'invention se rapporte également à un support solide enduit susceptible d'être obtenu par les procédés de l'invention.

Préférentiellement, le support solide est un papier ou un carton.

Un autre objet de l'invention est l'utilisation d'un support solide enduit tel que décrit ci-dessus dans un procédé de collage de ce support solide sur lui-même ou sur un autre support solide.

### DESCRIPTION DETAILLEE DE L'INVENTION

L'invention a pour objet un procédé comprenant l'enduction d'un support solide avec une sauce de couchage comprenant du PVA et une charge particulaire, typiquement une charge minérale, suivie du traitement de surface du support enduit par un greffage d'acides gras par chromatogénie.

Ce procédé permet de conférer des propriétés barrières à tous types de supports solides et en particulier des propriétés barrière à l'eau, au gaz, aux graisses et à la vapeur d'eau.

En particulier, l'invention se rapporte à un procédé d'enduction d'un support solide comprenant les étapes suivantes:
a) On dispose de particules couplées à du PVA;
b) On prépare une sauce de couchage comprenant du PVA et lesdites particules couplées à du PVA ;
c) On enduit le support solide avec ladite sauce de couchage ;
d) On greffe au moins un acide gras ayant une chaine aliphatique comprenant au moins 12 atomes de carbone sur le support solide enduit avec la sauce de couchage.

Tous types de supports solides peuvent être enduits et traités par les procédés selon la présente invention. Par « support solide », on entend tout support, substrat ou objet pouvant être enduit de PVA. Le PVA a un caractère filmogène lui permettant de s'adsorber facilement sur tout type de surface.

Le procédé est également adapté à l'enduction de supports solides poreux puisque le PVA jouera alors également un rôle occlusif. Le procédé selon l'invention est ainsi particulièrement utile pour l'enduction de supports cellulosiques et de supports cellulosiques poreux.

Dans un mode de réalisation préféré, le support solide est du papier ou du carton tels que les papiers industriels spéciaux, le papier d'impression et d'écriture, le papier journal, le carton, les papiers d'emballage souple ou le papier pour ondulé. Selon un mode de réalisation particulièrement avantageux de l'invention, le support est un support cellulosique d'emballage tel que le papier pour emballage souple ou le carton plat.

Lors de la préparation de sauces de couchage pour enduire des supports solides tels que le carton ou le papier, il est classique d'ajouter dans ces sauces de couchage des charges particulaires qui peuvent par exemple être constituées de charges minérales.

Ces particules entrant dans la composition des sauces de couchage sont bien connues de l'homme du métier. Elles peuvent avoir une forme ronde ou aplatie.

Tous types de particules peuvent être utilisés dans les procédés selon la présente invention. De préférence, ces particules ont une taille comprise entre 1nm et 100µm, plus préférentiellement comprise entre 10nm et 10µm.

Dans un mode de réalisation préféré, les particules sont constituées de particules minérales ou organiques : le kaolin, la montmorillonite, la laponite, le talc, le carbonate de calcium naturel, la silice micro particulaire ou colloïdale, des pigments comme le dioxyde de titane, les whiskers et les fibres de cellulose, des nano et microparticules de chitosan, de polysaccharides cristallins ou réticulés (amidon, dextrane), des particules de polymères organiques comme les latex.

Les charges minérales et les pigments sont classiquement utilisés dans le couchage de papier ou de carton. Il s'agit des mêmes particules minérales mais les pigments désignent en général des particules plus petites.

Dans les procédés selon la présente invention, les particules sont couplées à du PVA. Par « particules couplées à du PVA », on entend des particules portant des molécules de PVA ancrées à leur surface par des liaisons fortes. De préférence, le PVA est couplé aux particules par des liaisons covalentes ou polyélectrostatiques.

Afin d'optimiser les propriétés barrières, il est préférable que le PVA couplée aux particules présente un taux d'hydrolyse élevé.

De préférence, le PVA présente un degré d'hydrolyse supérieur à 80%, 85%, 90%, 95%, 98% et plus préférentiellement supérieur à 99%.

Ces particules couplées à du PVA par des liaisons fortes sont bien connus de l'homme du métier et les procédés de fabrication de ces particules sont décrits dans la littérature (Liesiene J et al, 2005, Liesiene J, 2009, Maruyama Hitoshi & Okaya Takuji, 1994a, Maruyama Hitoshi & Okaya Takuji, 1994b).

Par « PVA », on entend l'alcool polyvinylique. Il est typiquement obtenu par polymérisation radicalaire de l'acétate de vinyle dans le méthanol, suivie de l'alcoolyse. En fonction du degré d'hydrolyse une certaine quantité d'acétate reste attachée à la chaîne de polymère. Le PVA est donc caractérisé par sa masse molaire et son degré d'hydrolyse. 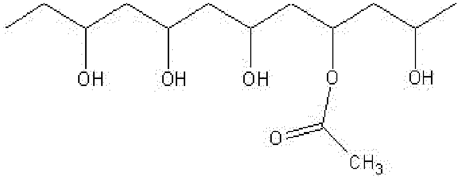 Schéma simplifié d'une molécule de PVA

En ce qui concerne le PVA couplé aux particules, sa masse molaire et son degré d'hydrolyse n'ont pas d'importance particulière. Le rôle de ce PVA est avant tout de fournir des groupes hydroxyle pouvant être estérifiés par des acides gras lors de la réaction de greffage ultérieure.

Dans un premier mode de réalisation, les particules sont couplées à du PVA cationique par des liaisons polyélectrostatiques. De préférence, les particules couplées à du PVA sont des particules minérales ou des pigments minéraux couplés à du PVA cationique. Dans des modes de réalisation préférés, il s'agit de particules de talc couplées à du PVA cationique, de particules de montmorillonite couplées à du PVA cationique ou de particules de laponite couplées à du PVA cationique.

Par PVA cationique, on entend un PVA dérivé avec des groupements cationiques. Ces produits sont bien connus de l'homme du métier (Moritani T & Yamauchi J, 1998a, Fatehi P, Xiao H, 2010, Liesiene J et al, 2005, Liesiene J, 2009) et sont disponibles commercialement (ex. le POVAL CM 318 de chez Kuraray®). Ils peuvent être obtenus par copolymerisation du vinyle acétate et des monomers cationiques suivie d'alcoolyse du polyvinyle acétate cationique formé (Moritani T&Yamauchi J, 1998a) ou synthétisés par la réaction du PVA avec des réactants cationiques spécifiques, (Fatehi P, Xiao H, 2010, Liesiene J et al, 2005, Liesiene J, 2009) utilisés fréquemment pour cationiser l'amidon.

Dans un autre mode de réalisation, les particules sont couplées à du PVA anionique par des liaisons polyélectrostatiques. De préférence, les particules couplées à du PVA sont des particules minérales ou des pigments minéraux couplés à du PVA anionique. Dans des modes de réalisation préférés, il s'agit de particules de carbonate de calcium couplées à du PVA anionique.

Par PVA anionique, on entend un PVA dérivé avec des groupements anioniques. Ces produits sont bien connus de l'homme du métier (Moritani T & Kajitani K, 1997, Moritani T&Yamauchi J, 1998b) et sont disponibles commercialement. Kuraray® dispose d'une gamme de PVA anioniques (carboxyliques) ayant differents des degrés d'hydrolyse et masses moléculaires. Les groupements carboxyles greffés sur les chaines de PVA augmentent le caractère hydrophile du PVA et favorisent donc son emploi dans des applications usant les interactions ioniques.

Dans un autre mode de réalisation, les particules sont couplées à du PVA silicate par des liaisons covalentes. De préférence, les particules couplées à du PVA sont des particules minérales ou des pigments minéraux couplés à du PVA silicate. Dans des modes de réalisation préférés, il s'agit de particules de montmorillonite couplée à du PVA silicate ou de particules de laponite couplées à du PVA silicate.

Par PVA silicate, on entend un PVA dérivé avec des groupements silicate. Ces produits sont bien connus de l'homme du métier (Maruyama Hitoshi & Okaya Takuji, 1994a ; Maruyama Hitoshi & Okaya Takuji, 1994b) et sont disponibles commercialement. Kuraray® commercialise des PVA silicate, sous le nom de Kuraray R- Polymeres (ex. le R-1130, le R-3109 ou le R-2105), connus pour leur capacité d'adhèrer aux substrats inorganiques comme le verre, l'alumnium, l'acier etc. Ces PVA silicates sont utilisés également comme liants pour tous les types de silice couramment utilisés comme pigments dans les encres.

Les particules couplées à du PVA sont mélangées avec du PVA pour obtenir une sauce de couchage. Cette sauce de couchage peut comprendre d'autres constituants habituels des sauces de couchage, et notamment des sauces de couchage pour papier et carton, tels que des pigments, des liants et des additifs.

De préférence, la sauce de couchage comprend au moins 5%, 10%, 15% ou 20% en poids de PVA et au moins 1%, 5%, 10% ou 15% en poids de particules couplées à du PVA. Préférentiellement, la sauce de couchage comprend entre 5% et 15% en poids de PVA et entre 1-10% en poids de particules couplées à du PVA. Plus préférentiellement, la sauce de couchage comprend entre 10%-11% en poids de PVA et entre 4-5% de particules couplées à du PVA. Ces valeurs dépendent naturellement de la taille des particules.

En ce qui concerne le PVA contenu dans la sauce de couchage, ses propriétés ont un impact sur les propriétés barrières finales du support enduit.

Afin d'optimiser ses propriétés barrières, il est préférable que le PVA compris dans la sauce de couchage présente un taux d'hydrolyse et une masse molaire élevés.

De préférence, le PVA présente un degré d'hydrolyse supérieur à 80%, 85%, 90%, 95%, 98% et plus préférentiellement supérieur à 99%.

De préférence, le PVA a une masse molaire (Mw) d'au moins 10 000, 15 000, 30 000, 50 000 ou d'au moins 75 000 g/mol.

Plus préférentiellement, le PVA a une masse molaire (Mw) comprise entre 13 000 et 300 000, 30 000 et 300 000, 50 000 et 200 000, 75 000 et 200 000, 100 000 et 200 000 g/mol.

La masse molaire Mw représente la masse molaire en poids, elle est typiquement déterminée par chromatographie d'exclusion diffusion selon des techniques classiques.

L'enduction ou le couchage du support ou du support solide avec la sauce de couchage s'effectue selon des méthodes habituelles. Typiquement, l'enduction est effectuée avec une solution aqueuse de PVA en appliquant des techniques bien connues de l'homme du métier. On citera notamment les presses encolleuses (« size press » ou « metering size press »), les coucheuses à lame, les coucheuses à crayon, les coucheuses à lame d'air et les coucheuses à rideau. Ensuite, on procède généralement au séchage du support enduit. Le séchage peut par exemple être effectué à l'aide seule ou combinée de fours à air chaud, de fours à rayonnements infrarouges, de cylindres sécheurs.

Lors de cette étape d'enduction du support solide avec la sauce de couchage, une couche de 1 g/m² à 30 g/m² est appliquée sur le support solide. De préférence, une couche de 1 à 50 g/m² est appliquée sur le support solide. Plus préférentiellement, une couche de 5 à 15 g/m² est appliquée sur le support solide.

Le support solide couché avec le PVA comprenant des particules ou des pigments couplés avec du PVA est ensuite greffé en surface avec des acides gras.

Par greffage, on entend l'établissement de liaisons covalentes entre le PVA et les acides gras à la surface du film de PVA et plus particulièrement une estérification des groupements hydroxyle libres du PVA.

Dans les procédés selon la présente invention, le greffage de l'acide gras sur le support solide enduit de sauce de couchage s'effectue par estérification des hydroxyles libres des particules couplées à du PVA et par estérification des hydroxyles libres du PVA libre contenu dans la sauce de couchage.

Ce greffage est effectué selon les méthodes décrites dans le brevet européen EP 1007 202 et dans la demande internationale WO2009/083525.

Le greffage s'effectue typiquement par l'estérification en phase hétérogène de la surface du film de PVA avec les acides gras. Le greffage en surface du film de PVA se traduit au niveau moléculaire par un greffage séquentiel des molécules de PVA à la surface du film. On entend, par greffage séquentiel, un greffage dans lequel la molécule de PVA est constituée de segments alternativement greffés et non greffés. Les segments greffés forment une phase continue de PVA greffé qui est dirigée vers l'extérieur du support. Les segments non greffés forment également une phase continue mais dirigée vers l'intérieur du support.

Par « acide gras », on entend un acide organique composé d'une chaîne hydrocarbonée linéaire terminée à l'une de ses extrémités par un groupement carboxylique et à l'autre extrémité par un groupement méthyle. Les acides gras utilisés pour le greffage sont des acides gras ayant une chaine aliphatique comprenant au moins 12 atomes de carbone. De préférence, l'acide gras est un acide gras ayant une chaine aliphatique comprenant 12 à 30 atomes de carbone. Préférentiellement, l'acide gras est un acide gras ayant une chaine aliphatique comprenant 16 à 22 atomes de carbone. Préférentiellement, l'acide gras est un acide gras saturé. Dans un mode de réalisation préféré de l'invention, l'acide gras est choisi parmi l'acide stéarique, l'acide palmitique et l'acide béhénique. De préférence, le greffage est effectué avec de l'acide stéarique.

Typiquement, le greffage de l'acide gras sur le film de PVA s'effectue par estérification en phase hétérogène. Etant donné que le greffage est effectué en phase hétérogène, seuls les OH accessibles en surface du film de PVA sont greffés avec un acide gras. Le greffage ne s'effectue pas dans toute l'épaisseur du film. Toutefois, la progression du front de greffage permet au réactif de pénétrer dans l'épaisseur du support car il se solubilise alors dans la phase d'alcool polyvinylique acylé superficielle créée par la réaction du chlorure d'acide avec le PVA de surface.

Avantageusement, le greffage est effectué avec un acide gras activé afin d'obtenir un greffage satisfaisant sur les groupes hydroxyles du film de PVA dans un temps de greffage assez court. L'acide gras activé est par exemple, un chlorure d'acide gras.

Le greffage est effectué selon des techniques bien connues de l'homme du métier par exemple dans des conditions de solvants aprotiques comme le toluène ou l'éther de pétrole en présence d'un réactif du type chlorure d'acide et d'un catalyseur de type pyridine. Le greffage peut aussi être effectué par les techniques de chimie chromatogénique (EP1007202). Cette technique utilise également des réactifs du type chlorure d'acide mais en l'absence de solvant et de catalyseur pendant la phase de greffage.

L'invention a également pour objet les supports solides enduits susceptibles d'être obtenus par les procédés décrits ci-dessus. Dans des modes de réalisation préférés, le support enduit est un papier ou un carton.

L'invention a également pour objet un moyen de coller les matériaux recouverts de PVA ayant subit le traitement chromatogénique. En effet, il est extrêmement difficile de coller ces matériaux car la couche de PVA greffée par des acides gras présente une surface très peu adhésive. Un traitement conventionnel d'activation de la surface par le procédé Coronna ne permet pas de résoudre ce problème. Nous avons trouvé que les films de PVA greffé contenant des particules décorées présentaient après activation de la surface par brulage superficiel un abaissement considérable de leur énergie de surface et qu'il était possible ensuite de les coller entre eux avec des colles conventionnelles.

### FIGURES

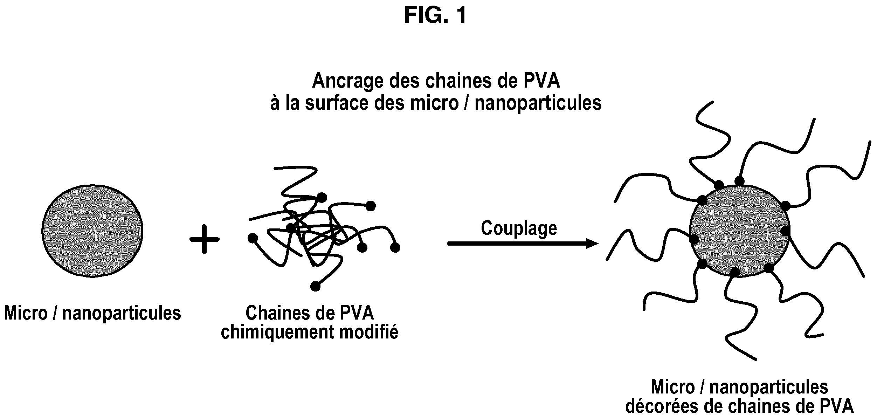

Figure 1 : Ancrage des chaines de PVA à la surface des micro/nanoparticules
Figure 2 : Acylation des chaines de PVA ancrées à la surface des micro/nanoparticules
Figure 3 : Comparaison couches de PVA englobant ou non des particules

### EXEMPLES

### Exemple 1

### Greffage chromatogénique d'une couche de Mowiol 28 99 contenant une dispersion de particules de montmorillonite enrobées par du PVA Silicate.

Dans un ballon de 500ml contenant 200ml d'eau déionisée, on introduit 1,5 g de particules de montmorillonite (Cloisite Na⁺, Rockwood) et 4,5 g de PVA Silicate (R1130 de chez Kuraray). La suspension est portée à 80-90°C puis agitée pendant 1 à 2 heures jusqu'à la complète dissolution du PVASilicate. Le pH de la solution est à ce moment 7-8. Il est ensuite ajusté à 3-4 par l'ajout de 1 ml d'acide acétique. Après 1/2h d'agitation, la dispersion est décantée et l'excès de PVASilicate est éliminé. Les particules décorées sont redispersées dans 281,5 g d'eau déionisée. On ajoute alors 28,5 g de PVA (Mowiol 2899), et le système est agité pour encore 1 à 2 heures à 80-90°C. La sauce de couchage obtenue est alors utilisée pour faire une enduction de 8g/m² sur des feuilles de papier à l'aide d'un Elcometer. Après séchage, les papiers enduits sont soumis au greffage chromatogénique par la méthode de transfert. Une feuille de papier dit émetteur est chargée en réactif par imprégnation avec une solution de chlorure d'acide stéarique à 2% dans l'éther de pétrole 100/140. Après évaporation complète du solvant, cette feuille est placée au contact de la feuille substrat et le sandwich ainsi constitué est placé pendant 10min dans une étuve chauffée à 150°C sous légère dépression (900 mbar) et sous balayage d'azote. Ces conditions permettent la diffusion du réactif de l'émetteur vers le substrat. La feuille substrat est ensuite séparée de la feuille émettrice et analysée. Avant le greffage, les feuilles de papier ont été conditionnées à 105°C pendant 24h.

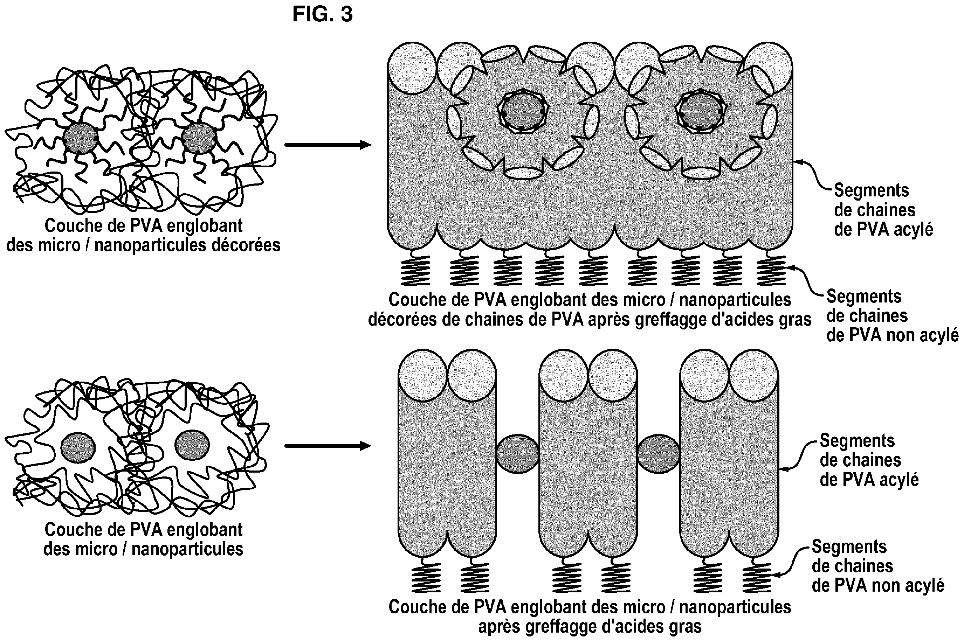

Des témoins sont réalisés soit en dispersant directement les particules de Montmorillonite natives dans le Mowiol 2899 dans les mêmes conditions de concentration soit en omettant les particules. Les propriétés barrière à l'eau des papiers enduits sont mesurées par la méthode de Cobb 1800 (Norme Iso 535, 1991). Les résultats obtenus indiquent une valeur de 5g/m2 (écart type 0,3 g/m2)) pour le témoin sans particules et de 11,6 g/m2 (écart type 1,6 g/m2) pour le témoin comprenant les particules natives. Ces résultats indiquent donc une nette dégradation des propriétés barrières suite à l'adjonction des particules dans la sauce de couchage. Les particules se comportent donc comme des puits hydrophiles (figure 3). En revanche, les résultats obtenus avec les particules recouvertes de PVA Silicate indiquent une valeur de 5,1g/m2 (écart type 1,2 g/m2) analogue à celle obtenue avec du Mowiol pur. La présence de chaines de PVA autour des particules a donc permis d'éliminer le phénomène de dégradation des propriétés barrières liée à l'utilisation de ces dernières. Les particules de Montmorillonite décorées de PVA Silicate se comportent comme si elles étaient entièrement constituées de PVA (figure 3).

### Exemple 2

### Greffage chromatogénique d'une couche de Mowiol 28 99 contenant une dispersion de particules de laponite enrobées par du PVA Silicate

On utilise le même protocole que celui décrit dans l'exemple 1 en remplaçant la montmorillonite par de la laponite (Rockwood). Les résultats obtenus indiquent cette fois une valeur d'absorption d'eau de 9,2 g/m2 (écart type 0,6 g/m2) pour la couche de PVA contenant la laponite native et de seulement 3,7 g/m2 (écart type 0,7 g/m2) pour la laponite enrobée de PVA Silicate. On constate une nette amélioration des propriétés barrières suite à la mise en oeuvre de l'invention.

### Exemple 3

### Préparation d'une suspension de particules de talc enrobées par du PVA cationique dans une solution de PVA neutre

On utilise le même protocole que celui décrit dans l'exemple 1 en remplaçant la montmorillonite par du talc (Steaplus HAR, Imerys) et le PVASi par du PVA Cationique (POVAL CM 318, Kuraray) et en omettant l'étape d'ajout d'acide acétique. Les résultats obtenus indiquent une valeur d'absorption d'eau de 4,1 g/m2 (écart type 0,5 g/m2) pour la couche de PVA contenant le talc natif et de 2,7 g/m2 (1,1) pour le talc enrobé de PVA cationique. Ces résultats indiquent que les particules de talc natives entrainent déjà une moindre dégradation des propriétés barrières que les particules de montmorillonite et de laponite mais que de plus l'enrobage par des chaines de PVA cationique conduit à une amélioration particulièrement nette des propriétés barrières ce qui démontre l'intérêt de l'invention.

### Exemple 4

### Greffage chromatogénique d'une couche de Mowiol 28 99 contenant une dispersion de particules de montmorillonite enrobées par du PVA cationique

On utilise le même protocole que celui décrit dans l'exemple 3 en remplaçant le talc par de la montmorillonite. Les résultats obtenus indiquent une valeur d'absorption d'eau de 7,0 g/m2 (écart type 1,5 g/m2) pour la couche contenant la montmorillonite enrobée de PVA cationique. Ces résultats indiquent que dans le cas de la montmorillonite, l'utilisation du PVA cationique conduit à des propriétés barrières à l'eau inférieures à celles obtenues en utilisant le PVASi, ce qui démontre que la qualité de l'enrobage des particules de montmorillonite par du PVA cationique est moindre par rapport au PVASilicate.

### Exemple 5

### Greffage chromatogénique d'une couche de Mowiol 28 99 contenant une dispersion de particules de laponite enrobées par du PVA cationique

On utilise le même protocole que celui décrit dans l'exemple 3 en remplaçant le talc par de la laponite. Les résultats obtenus indiquent une valeur d'absorption d'eau de 4,5 g/m2 (écart type 0,5 g/m2) pour la couche contenant la laponite enrobée de PVA cationique. Ces résultats indiquent que dans le cas de la laponite l'utilisation du PVA cationique conduit à des propriétés barrières à l'eau inférieures à celles obtenus avec du PVASilicat, ce qui démontre que la qualité de l'enrobage des particules de laponite par du PVA cationique est moindre par rapport au PVASi. La comparaison des résultats obtenus avec ceux obtenus avec la montmorillonite indique qu'il existe une spécificité liée à la nature des particules elles-mêmes.

### Exemple 6

### Greffage chromatogénique d'une couche de Mowiol 28 99 contenant une dispersion de particules de carbonate de calcium enrobées par du PVA anionique

On utilise le même protocole que celui décrit dans l'exemple 3 en remplaçant le talc par du carbonate de calcium (Carbital 110, Imerys) et le PVA cationique par le PVA anionique (KL 318 de chez Kuraray). Les résultats obtenus indiquent une valeur d'absorption d'eau de 10,5 g/m2 (écart type 0,7 g/m2) pour la couche contenant le carbonate natif et de 4,6g/m2 (écart type 0,6 g/m2) pour celle contenant du carbonate enrobée de PVA anionique. Ces résultats indiquent qu'il est possible d'obtenir de bonnes propriétés barrières en adaptant la nature du PVA à la nature chimique des particules.

### Exemple 7

### Analyse par IR-ATR

### Spectres IR-ATR papiers couchés et greffés

Nous avons ensuite procédé à l'analyse par IR en mode ATR des papiers enduits avant et après le greffage chromatogénique. Les résultats obtenus confirment les résultats obtenus sur la barrière à l'eau.

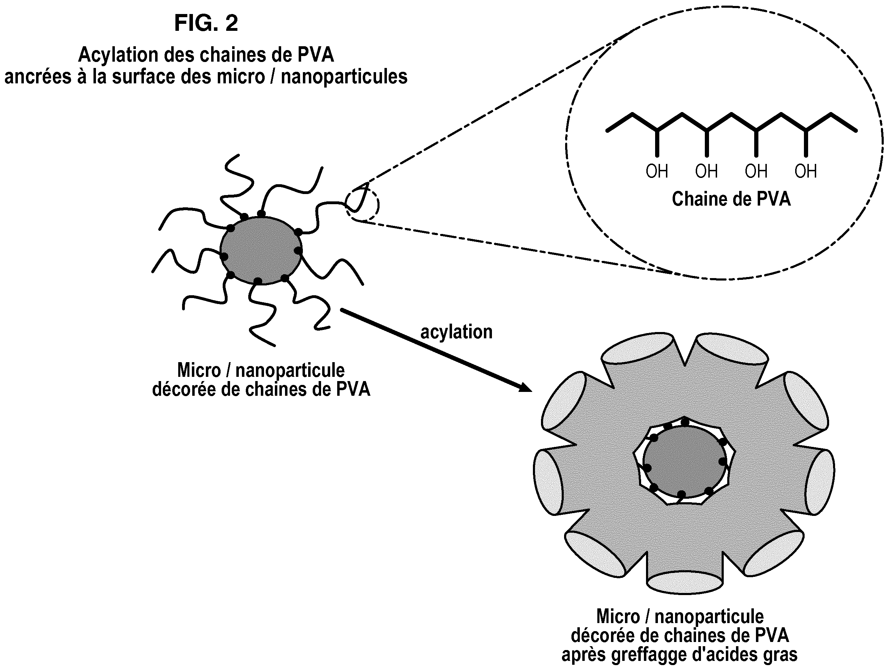

Les résultats présentés sur la figure 2 indiquent en effet que le spectre de la couche de Mowiol 28 99 greffée contenant des particules de Montmorillonite native présente une bande résiduelle à 3306 cm⁻¹ relativement importante. Cette bande est caractéristique des fonctions OH. Ce résultat est donc en accord avec la dégradation des propriétés barrière à l'eau observée avec la montmorillonite native et que nous avions interprétée comme résultant de la présence de puits hydrophiles. Par contre le spectre obtenu avec la montmorillonite décorée présente une bande beaucoup plus faible, comparable à celle obtenue avec le Mowiol pur ce qui est en accord avec les niveaux de barrière qui sont analogues. De même la bande OH observée avec les particules enrobées de PVA cationique apparait plus importante que celle observée avec le PVA pur ce qui est à nouveau en accord avec des propriétés barrières inférieures.

Les résultats présentés sur la figure 3 sont encore plus nets. Ils indiquent une bande OH résiduelle très importante pour la couche contenant du carbonate non enrobé de PVA anionique et une bande OH très diminuée pour la couche contenant du carbonate enrobé de PVA anionique.

### Exemple 8

### Collage des papiers enduits de PVA greffé contenant des particules de talc associées à du PVA cationique.

Une feuille de papier enduit de PVA contenant des particules de talc associées par liaison poly électrolytique à du PVA cationique obtenue dans l'exemple 3, est soumis localement à un traitement oxydant par simple brûlage superficiel. L'angle de contact est mesuré avant et après le brûlage. La valeur passe de 108° à moins de 10°. La feuille est ensuite collée sur elle-même par une colle amylacée ordinaire.

### REFERENCES

### Références brevet

EP 1007202
WO 2009/083525
US 7 144 946

### Références bibliographiques

1. Chun-Chen Yang & Ying-Jeng Lee, "Preparation of the acidic PVA/MMT nanocomposite polymer membrane for the direct methanol fuel cell (DMFC)", Thin Solid Films 517, p. 4735-4740,(2009)
2. Duangkaew P., Wootthikanokkhan J., "Methanol Permeability and Proton Conductivity of Direct Methanol Fuel Cell Membranes Based on Sulfonated Poly(vinyl alcohol)-Layered Silicate Nanocomposites", Journal of Applied Polymer Science, Vol. 109, p. 452-458 (2008)
3. Fatehi P, Xiao H, "Effect of cationic PVA characteristics on fiber and paper properties at saturation level of polymer adsorption",Carbohydrate Polymers 79, p. 423-428, 2010
4. Liesiene J et al, "Sorption of poly(vinyl alcohol) and its cationic derivative on silica oxide: effect of charge", Chemical Technology 2 (36) - ISSN 1392-1231 - p. 51 - 56, 2005.
5. Liesiene Jolanta, "Coating of Silica Surface with Poly(vinyl alcohol): Effect of the Surface Charge", 2009 - poster
6. Maruyama Hitoshi & Okaya Takuji, "Study on the interaction between poly(vinyl alcohol) containing silanol groups at side chains and inorganic substances" Nippon Kagaku Kaishi (4), p. 365-70, 1994a
7. Maruyama Hitoshi & Okaya Takuji, "Study on the composites of colloidal silica and poly(vinyl alcohol) modified with a small amount of silanol groups", Nippon Kagaku Kaishi (5), p. 450-5, 1994b
8. Moritani T & Kajitani K, "Functional modification of poly(vinyl alcohol) by copolymerization: 1. Modification with carboxylic monomers", Polymer Vol. 38 No. 12, p. 2933-2945, 1997
9. Moritani T & Yamauchi J, " Functional modification of poly(vinyl alcohol) by copolymerization III. Modification with cationic monomers", Polymer Vol. 39 No. 3, p. 559-572, 1998a
10. Moritani T & Yamauchi J, "Functional modification of poly(vinyl alcohol) by copolymerization: II. Modification with a sulfonate monomer", Polymer Vol. 39 No. 3, p. 553-557, 1998b
11. Schuman T et al., "Characteristics of pigment-filled polymer coatings on paperboard", Progress in Organic Coatings 54, p.360-371, (2005).

## Revendications

1. Procédé d'enduction d'un support solide comprenant les étapes suivantes:
a) On dispose de particules couplées à du PVA;
b) On prépare une sauce de couchage comprenant du PVA et lesdites particules couplées à du PVA ;
c) On enduit le support solide avec ladite sauce de couchage ;
d) On greffe au moins un acide gras ayant une chaine aliphatique comprenant au moins 12 atomes de carbone sur le support solide enduit avec la sauce de couchage.

2. Procédé d'enduction d'un support solide selon la revendication 1 dans lequel le support solide est un support cellulosique poreux tel que le papier et le carton.

3. Procédé d'enduction d'un support solide selon l'une des revendications 1-2 dans lequel le PVA est couplé aux particules par des liaisons covalentes ou polyélectrostatiques.

4. Procédé d'enduction d'un support solide selon l'une des revendications précédentes dans lequel les particules sont des particules minérales choisies parmi la montmorillonite, la laponite, le talc et le carbonate de calcium.

5. Procédé d'enduction d'un support solide selon l'une des revendications précédentes dans lequel les particules sont des particules minérales couplées à du PVA cationique.

6. Procédé d'enduction d'un support solide selon l'une des revendications 1 à 4 dans lequel les particules sont des particules minérales couplées à du PVA anionique.

7. Procédé d'enduction d'un support solide selon l'une des revendications 1 à 4 dans lequel les particules sont des particules minérales couplées à du PVA silicate.

8. Procédé d'enduction d'un support solide selon l'une des revendications précédentes dans lequel le PVA compris dans la sauce de couchage a un taux d'hydrolyse supérieur à 80%.

9. Procédé d'enduction d'un support solide selon l'une des revendications précédentes dans lequel le PVA compris dans la sauce de couchage a une masse molaire (Mw) d'au moins 10 000 g/mol.

10. Procédé d'enduction d'un support solide selon l'une des revendications précédentes dans lequel la sauce de couchage comprend au moins 5% en poids de PVA et au moins 1% en poids de particules couplées à du PVA.

11. Procédé d'enduction d'un support solide selon l'une des revendications précédentes dans lequel l'acide gras est choisi parmi l'acide stéarique, l'acide palmitique et l'acide béhénique.

12. Procédé d'enduction d'un support solide selon l'une des revendications précédentes dans lequel le greffage de l'acide gras est effectué par estérification en phase hétérogène avec un chlorure d'acide ayant une chaine aliphatique comprenant au moins 12 atomes de carbone.

13. Procédé d'enduction d'un support solide selon l'une des revendications précédentes dans lequel le greffage de l'acide gras est effectué par estérification en phase hétérogène avec du chlorure d'acide stéarique.

14. Support solide enduit susceptible d'être obtenu par le procédé selon l'une des revendications 1-13.

15. Support solide enduit selon la revendication 14 dans lequel le support solide est un papier ou un carton.

16. Utilisation d'un support solide enduit selon l'une des revendications 14-15 dans un procédé de collage dudit support solide sur lui-même ou sur un autre support solide.

## Patentansprüche

1. Beschichtungsverfahren eines festen Trägers, umfassend die folgenden Schritte:
a) Es werden mit PVA gekoppelte Partikel verfügt;
b) Es wird eine Schichtsauce zubereitet, die PVA und die genannten mit PVA gekoppelten Partikel umfassen;
c) Der feste Träger wird mit der genannten Schichtsauce beschichtet;
d) Es wird wenigstens eine Fettsäure mit einer aliphatischen Kette, die wenigstens 12 Kohlenstoffatome umfasst, auf den festen Träger übertragen, der mit der Schichtsauce beschichtet ist.

2. Beschichtungsverfahren eines festen Trägers gemäß Anspruch 1, bei dem der feste Träger ein poröser Zelluloseträger ist, wie z. B. Papier und Karton.

3. Beschichtungsverfahren eines festen Trägers gemäß einem der Ansprüche 1 - 2, bei dem das PVA durch kovalente oder polyelektrostatische Verbindungen an die Partikel gekoppelt ist.

4. Beschichtungsverfahren eines festen Trägers gemäß einem der voranstehenden Ansprüche, bei dem die Partikel mineralische Partikel sind, die aus Montmorillonit, Laponit, Talkum und Kalziumkarbonat ausgewählt sind.

5. Beschichtungsverfahren eines festen Trägers gemäß einem der voranstehenden Ansprüche, bei dem die Partikel mineralische Partikel sind, die mit kationischem PVA gekoppelt sind.

6. Beschichtungsverfahren eines festen Trägers gemäß einem der Ansprüche 1 bis 4, bei dem die Partikel mineralische Partikel sind, die mit anionischem PVA gekoppelt sind.

7. Beschichtungsverfahren eines festen Trägers gemäß einem der Ansprüche 1 bis 4, bei dem die Partikel mineralische Partikel sind, die mit Silikat-PVA gekoppelt sind.

8. Beschichtungsverfahren eines festen Trägers gemäß einem der voranstehenden Ansprüche, bei dem das in der Schichtsauce umfassend PVA ein Hydrolysegrad von mehr als 80 % hat.

9. Beschichtungsverfahren eines festen Trägers gemäß einem der voranstehenden Ansprüche, bei dem das in der Schichtsauce umfassend PVA eine molare Masse (Mw) von wenigstens 10.000 g/mol hat.

10. Beschichtungsverfahren eines festen Trägers gemäß einem der voranstehenden Ansprüche, bei dem die Schichtsauce wenigstens 5 Gew.-% PVA und wenigstens 1 Gew.-% mit PVA gekoppelten Partikel umfasst.

11. Beschichtungsverfahren eines festen Trägers gemäß einem der voranstehenden Ansprüche, bei dem die Fettsäure ausgewählt ist aus Stearinsäure, Palmitinsäure und Behensäure.

12. Beschichtungsverfahren eines festen Trägers gemäß einem der voranstehenden Ansprüche, bei dem das Übertragen der Fettsäure per Veresterung in heterogener Phase mit einer Säurechlorid ausgeführt ist, die eine aliphatische Kette hat, welche wenigstens 12 Kohlenstoffatome umfasst.

13. Beschichtungsverfahren eines festen Trägers gemäß einem der voranstehenden Ansprüche, bei dem das Übertragen der Fettsäure per Veresterung in heterogener Phase mit Stearinsäurechlorid ausgeführt ist.

14. Beschichteter fester Träger, der geeignet ist, durch das Verfahren gemäß einem der Ansprüche 1-13 erhalten zu werden.

15. Beschichteter fester Träger gemäß Anspruch 14, bei dem der feste Träger ein Papier oder Karton ist.

16. Verwendung eines beschichteten festen Trägers gemäß einem der Ansprüche 14 - 15 in einem Klebenverfahren des genannten festen Trägers auf sich selbst oder auf einen anderen festen Träger.

## Claims

1. A method for coating a solid substrate comprising the following steps:
a) Particles coupled to PVA are provided;
b) A coating slip is prepared comprising PVA and said PVA-coupled particles;
c) The solid substrate is coated with said coating slip;
d) At least one fatty acid having an aliphatic chain comprising at least 12 carbon atoms is grafted on the solid substrate coated with the coating slip.

2. The method for coating a solid substrate according to claim 1 wherein the solid substrate is a porous cellulose substrate such as paper and cardboard.

3. The method for coating a solid substrate according to one of claims 1-2 wherein the PVA is coupled to the particles via covalent or polyelectrostatic bonds.

4. The method for coating a solid substrate according to one of the preceding claims wherein the particles are mineral particles selected from among montmorillonite, laponite, talc and calcium carbonate.

5. The method for coating a solid substrate according to one of the preceding claims wherein the particles are mineral particles coupled to cationic PVA.

6. The method for coating a solid substrate according to one of claims 1 to 4 wherein the particles are mineral particles coupled to anionic PVA.

7. The method for coating a solid substrate according to one of claims 1 to 4 wherein the particles are mineral particles coupled to PVA silicate.

8. The method for coating a solid substrate according to one of the preceding claims wherein the PVA contained in the coating slip has a degree of hydrolysis higher than 80%.

9. The method for coating a solid substrate according to any of the preceding claims wherein the PVA contained in the coating slip has a molecular weight (Mw) of at least 10 000 g/mol.

10. The method for coating a solid substrate according to one of the preceding claims wherein the coating slip comprises at least 5% by weight of PVA and at least 1% by weight of PVA-coupled particles.

11. The method for coating a solid substrate according to one of the preceding claims wherein the fatty acid is selected from among stearic acid, palmitic acid and behenic acid.

12. The method for coating a solid substrate according to one of the preceding claims wherein the grafting of the fatty acid is performed by heterogeneous phase esterification with an acid chloride having an aliphatic chain comprising at least 12 carbon atoms.

13. The method for coating a solid substrate according to one of the preceding claims wherein the grafting of the fatty acid is performed by heterogeneous phase esterification with stearic acid chloride.

14. A coated solid substrate likely to be obtained using the method according to one of claims 1-13.

15. The coated solid substrate according to claim 14 wherein the solid substrate is paper or cardboard.

16. The use of a coated solid substrate according to one of claims 14-15 in a process to glue said solid substrate to itself or onto another solid substrate.
